# EUROPEAN PATENT APPLICATION

(11) **EP 3 720 166 A1**
(43) Date of publication of application: **07.10.2020**
(21) Application number: 18896160.1
(22) Date of filing: 10.10.2018
(51) Int. Cl.: H04W 16/10

(54) **METHOD AND APPARATUS FOR PROCESSING INITIALIZATION SIGNAL**

(30) Priority: 29.12.2017 CN 201711489300
(71) Applicant: HUAWEI TECHNOLOGIES CO., LTD., Shenzhen, Guangdong 518129 (CN)
(72) Inventor: YIN, Hui, Shenzhen, Guangdong 518129 (CN); LV, Jinxiong, Shenzhen, Guangdong 518129 (CN)
(74) Representative: Grünecker Patent- und Rechtsanwälte PartG mbB
(86) International application number: PCT/CN2018/109586
(87) International publication number: WO 2019/128374

(57) **Abstract**

Embodiments of the present invention disclose an initialization signal processing method. The method includes: receiving, by a network side device, a request message sent by a CPE, where the request message indicates that the CPE requests to enter an initialization phase and occupy FDX transmission resources on a twisted pair; if there are some idle resources in the FDX transmission resources, sending, by the network side device, a notification message to the CPE, where the notification message instructs the CPE to occupy the some idle resources in the FDX transmission resources; and receiving, by the network side device, an initialization phase message sent by the CPE on the some idle resources in the FDX transmission resources, or receiving an initialization phase message. The embodiments of the present invention disclose an initialization signal processing device. In the solutions of the embodiments, the CPE that requests to enter the initialization phase is separately allocated FDX transmission resources, and does not need to contend with another CPE in a showtime phase for a US transmission resource and a DS transmission resource in a basic frame, to complete initialization in a shorter time.

## Description

### TECHNICAL FIELD

The present invention relates to the field of communications technologies, and in particular, to an initialization signal processing method and an apparatus.

### BACKGROUND

In recent years, during communication between a central office (Central Office, CO) device and a customer-premises equipment (Custom Premise Equipment, CPE), a twisted-pair line can provide a transmission rate of approximately 1 Gbps to users. Therefore, twisted-pair network architectures attract much attention of operators. A point-to-multipoint (Point-to-multipoint, P2MP) network architecture is one of the twisted-pair network architectures. In the P2MP network architecture, one end of a twisted-pair line is connected to one port of a central office device, and the other end of the twisted-pair line is connected to a plurality of CPEs. The plurality of CPEs share one line in a time division multiplexing mode, a frequency division multiplexing mode, or a code division multiplexing mode. Therefore, the CO device can communicate with the plurality of CPEs. The CO device usually includes a plurality of ports. Each port may be connected to one twisted-pair line, and each line may be connected to a plurality of CPEs. Usually, all CPEs in a family share one line. A time for each line is divided into a plurality of frames. The CPEs that share the line perform data transmission with the CO device in different frames. To make full use of resources of the line, the CO device dynamically allocates, to the CPEs, frames used for data transmission.

In the P2MP network architecture, a manner of implementing interconnection and interworking between a CO and a plurality of CPEs is to make all CPEs in a family share one G.fast line in a time division multiplexing mode, a frequency division multiplexing mode, or a code division multiplexing mode. In a time division multiplexing solution, a transmission time for a line is divided into a plurality of time slots (time slot), and the CPEs occupy different time slots. In this case, interconnection and interworking between the CO and the plurality of CPEs can be implemented, and there is no interference between the CPEs. In a frequency division multiplexing solution, a frequency band for a line is divided into a plurality of subbands (sub frequency band), and the CPEs occupy different subbands, but can occupy a same sending time, so that interworking between the CO and the plurality of CPEs can also be implemented. A guard band is reserved between subbands, and therefore, there is no interference between the CPEs. In a code division multiplexing solution, the CPEs are distinguished from each other by orthogonal codes, and can occupy a same sending time and a same frequency band.

A state of a line may change, and crosstalk between lines may also change. Therefore, the CO further needs to correct upstream crosstalk cancellation coefficients during communication between the CO and the CPEs. Further, the CPEs need to send upstream synchronization symbols to the CO during the communication between the CO and the CPEs, so that the CO can correct the upstream crosstalk cancellation coefficients based on received synchronization symbols.

Generally, establishment of a data transmission channel between two communication parties involves three phases: a handshake (handshake) phase, an initialization (initialization) phase, and a data transmission (showtime) phase. The handshake phase is a phase in which a connection is established between a transmit end and a receive end. In the initialization phase, the transmit end and the receive end exchange some necessary information. The information determines a rate and stability of transmission after the transmit end and the receive end enter the showtime phase, and whether received information can be correctly demodulated after the transmit end and the receive end enter the showtime phase. The showtime phase is a phase in which the transmit end and the receive end transmit data with each other.

In the P2MP architecture, there are a plurality of CPEs on one line. When there already is a CPE in the showtime phase, if another CPE needs to be initialized, the CPE in the initialization phase and the CPE in the showtime phase have equal opportunities to be allocated transmission resources. Consequently, it takes a long time for the CPE in the initialization phase to complete initialization.

### SUMMARY

This application provides an initialization signal processing method and an apparatus, to resolve a problem that an initialization time of a CPE is excessively long.

According to a first aspect, this application provides an initialization signal processing method, where the method is performed by a network side device, the network side device includes a plurality of ports, at least one of the plurality of ports is connected to a user node with a twisted pair, the user node is connected to at least two customer-premises equipments CPEs with distribution lines, the network side device, CPEs and twisted pairs make up a specific twisted-pair network, and the method includes:
receiving, by the network side device, a request message sent by a CPE, where the request message indicates that the CPE requests to enter an initialization phase and occupy FDX transmission resources on a twisted pair, the FDX transmission resources include an FDX US transmission resource and an FDX DS transmission resource, the FDX US transmission resource is a resource on which the CPE sends a US signal and the network side device receives the US signal in a downstream transmission period, and the FDX DS transmission resource is a resource on which the network side device sends a DS signal and the CPE receives the DS signal in an upstream transmission period;
if there are some idle resources in the FDX transmission resources, sending, by the network side device, a notification message to the CPE, where the notification message instructs the CPE to occupy the some idle resources in the FDX transmission resources; and
receiving, by the network side device, an initialization phase message sent by the CPE on the some idle resources in the FDX transmission resources, and sending an initialization phase message to the CPE on the some idle resources in the FDX transmission resources.

In the solution of this embodiment, the CPE that requests to enter the initialization phase is separately allocated FDX transmission resources by the network side device, and does not need to contend with another CPE in a showtime phase for a US transmission resource and a DS transmission resource in a basic frame, to complete initialization in a relatively short time. This reduces waiting time of accessing a network by a user.

In a first possible implementation of the first aspect, the some idle resources in the FDX transmission resources are at least a part of the FDX transmission resources which is idle in frequency domain, time domain, or code domain.

With reference to the first aspect or the first possible implementation of the first aspect, in a second possible implementation, before the sending, by the network side device, a notification message to the CPE, the method further includes: determining whether the FDX transmission resources are idle.

With reference to the second possible implementation of the first aspect, in a third possible implementation, the method further includes: if all the FDX transmission resources have been occupied, instructing, by the network side device, a CPE that occupies the FDX transmission resources to release some of the FDX transmission resources occupied by the CPE, or directly setting some of the FDX transmission resources to idle, or rejecting the request of the CPE.

According to a second aspect, this application provides an initialization signal processing method, where the method is performed by a customer-premises equipment CPE, the CPE is one of a plurality of CPEs connected to a user node, the user node is connected to a network side device with a twisted pair, and the method includes:
sending, by the CPE, a request message to the network side device, where the request message indicates that the CPE requests to enter an initialization phase and occupy FDX transmission resources on the twisted pair, the FDX transmission resources include an FDX US transmission resource and an FDX DS transmission resource, the FDX US transmission resource is a resource on which the CPE sends a US signal and the network side device receives the US signal in a downstream transmission period, and the FDX DS transmission resource is a resource on which the network side device sends a DS signal and the CPE receives the DS signal in an upstream transmission period;
receiving, by the CPE, a notification message sent by the network side device, where the notification message instructs the CPE to occupy some idle resources in the FDX transmission resources; and
sending, by the CPE, an initialization phase message on the some idle resources in the FDX transmission resources, and receiving, on the some idle resources in the FDX transmission resources, an initialization phase message sent by the network side device.

In a first possible implementation of the second aspect, the some idle resources in the FDX transmission resources are at least a part of the FDX transmission resources which is idle in frequency domain, time domain, or code domain.

According to a third aspect, this application provides a network side device, including a transmission resource allocation module and a plurality of transceivers, where at least one transceiver A in the plurality of transceivers is connected to a user node with a twisted pair;
the transceiver A is configured to receive a request message sent by a CPE, where the request message indicates that the CPE requests to enter an initialization phase and occupy FDX transmission resources on the twisted pair, the FDX transmission resources include an FDX US transmission resource and an FDX DS transmission resource, the FDX US transmission resource is a resource on which the CPE sends a US signal and the transceiver A receives the US signal in a downstream transmission period, and the FDX DS transmission resource is a resource on which the transceiver A sends a DS signal and the CPE receives the DS signal in an upstream transmission period;
the transmission resource allocation module is configured to: when there are some idle resources in the FDX transmission resources, allocate the some idle resources to the CPE, and the transceiver A sends a notification message to the CPE, where the notification message instructs the CPE to occupy some idle resources in the FDX transmission resources; and
the transceiver A is further configured to: receive an initialization phase message sent by the CPE on the some idle resources in the FDX transmission resources, and send an initialization phase message to the CPE on the some idle resources in the FDX transmission resources.

In a first possible implementation of the third aspect, the some idle resources in the FDX transmission resources are at least a part of the FDX transmission resources which is idle in frequency domain, time domain, or code domain.

With reference to the third aspect or the first possible implementation of the third aspect, in a second possible implementation, before the sending, by the network side device, a notification message to the CPE, the method further includes: determining whether the FDX transmission resources are idle.

In a third possible implementation of the third aspect, the network side device further includes a transmission resource occupation determining module, where the transmission resource occupation determining module is configured to determine whether the FDX transmission resources are occupied.

With reference to the third possible implementation of the third aspect, in a fourth possible implementation, if all the FDX transmission resources have been occupied, the transmission resource occupation determining module is configured to: instruct, through the transceiver 502A, a CPE that occupies the FDX transmission resources to release some of the FDX transmission resources occupied by the CPE, or directly set some of the FDX transmission resources to idle, or reject the request of the CPE.

According to a fourth aspect, this application provides a customer-premises equipment CPE, where the CPE is one of a plurality of CPEs connected to a user node, the user node is connected to a network side device with a twisted pair, and the CPE includes an initialization module and a transceiver, where
the initialization module is configured to control the transceiver to send a request message to the network side device, where the request message indicates that the CPE requests to enter an initialization phase and occupy FDX transmission resources on the twisted pair, the FDX transmission resources include an FDX US transmission resource and an FDX DS transmission resource, the FDX US transmission resource is a resource on which the transceiver sends a US signal and the network side device receives the US signal in a downstream transmission period, and the FDX DS transmission resource is a resource on which the network side device sends a DS signal and the transceiver receives the DS signal in an upstream transmission period; and
the transceiver is configured to: receive a notification message sent by the network side device, where the notification message instructs the CPE to occupy some idle resources in the FDX transmission resources to send and receive initialization phase messages.

In a first possible implementation of the fourth aspect, after exchange of the initialization phase messages ends, the initialization module is configured to release the some resources that are in the FDX transmission resources and are used to exchange the initialization phase messages.

According to a fifth aspect, an embodiment of the present invention provides a network side device, including one or more processors, a memory, and a communications interface, where
the memory and the communications interface are coupled to the one or more processors; and
the memory is configured to store computer program code, the computer program code includes an instruction, and when the one or more processors execute the instruction, the network side device is configured to perform the synchronization symbol sending method according to the first aspect or any implementation of the first aspect.

According to a sixth aspect, an embodiment of the present invention provides a customer-premises equipment, including one or more processors, a memory, and a communications interface, where
the memory and the communications interface are coupled to the one or more processors; and
the memory is configured to store computer program code, the computer program code includes an instruction, and when the one or more processors execute the instruction, the customer-premises equipment is configured to perform the synchronization symbol sending method according to the second aspect or any implementation of the second aspect.

According to a seventh aspect, an embodiment of the present invention provides a synchronization symbol sending system, including the network side device according to the fifth aspect and the customer-premises equipment according to the sixth aspect.

According to an eighth aspect, an embodiment of the present invention provides a computer-readable storage medium, where the computer-readable storage medium stores an instruction, and when the instruction is run on a computer, the computer is enabled to perform the method according to the first aspect or any implementation of the first aspect.

According to a ninth aspect, an embodiment of the present invention provides a computer-readable storage medium, where the computer-readable storage medium stores an instruction, and when the instruction is run on a computer, the computer is enabled to perform the method according to the second aspect or any implementation of the second aspect.

In the solutions of the embodiments, the CPE that requests to enter the initialization phase is separately allocated FDX transmission resources, and does not need to contend with another CPE in a showtime phase for a US transmission resource and a DS transmission resource in a basic frame, to complete initialization in a relatively short time. This reduces waiting time of accessing a network by a user, and improves internet surfing experience of the user.

### BRIEF DESCRIPTION OF DRAWINGS

To describe the technical solutions in the embodiments of the present invention more clearly, the following briefly describes the accompanying drawings required for describing the embodiments.
FIG. 1 is a schematic diagram of a network architecture according to an embodiment of the present invention;
FIG. 2 is a schematic diagram of a basic frame according to an embodiment of the present invention;
FIG. 3 is a schematic diagram of another basic frame according to an embodiment of the present invention;
FIG. 4 is a schematic flowchart of a method according to an embodiment of the present invention;
FIG. 5 is a schematic structural diagram of a network side device according to an embodiment of the present invention;
FIG. 6 is a schematic structural diagram of a CPE according to an embodiment of the present invention;
FIG. 7 is a schematic structural diagram of another network side device according to an embodiment of the present invention; and
FIG. 8 is a schematic structural diagram of another CPE according to an embodiment of the present invention.

### DESCRIPTION OF EMBODIMENTS

To make the objectives, technical solutions, and advantages of the embodiments of the present invention clearer, the following clearly and completely describes the technical solutions of the embodiments of the present invention with reference to the accompanying drawings in the embodiments of the present invention. The embodiments in this application and the features in the embodiments may be mutually combined provided that they do not conflict with each other.

The following describes some terms in the embodiments of this application, to help a person skilled in the art have a better understanding.
(1) CPE: CPE represents a customer-premises equipment, is usually deployed in a family that uses a twisted pair for access, and is configured to provide integrated access of one or more services for a home user, such as a wired broadband service, an internet protocol television (internet protocol television, IPTV) service, and a voice over internet protocol (voice over internet protocol, VoIP) service. The CPE implements a connection between an access network and a user terminal device, for example, may be a home gateway, a broadband integrated service access box, and a user terminal device integrating an access function.
(2) CO: CO represents a central office device, which may also be referred to as a network side device. In a P2MP scenario, the central office device may be connected to a plurality of CPEs through a user node, to provide a network access service for the plurality of CPEs. It should be noted that, the central office device may not be disposed in a central office, provided that the central office device is upstream of a user side device in a network. A specific product form of the central office device is a digital subscriber line access multiplexer (digital subscriber line access multiplexer, DSLAM), a multiple x unit (multiple x unit, MxU), a distribution point unit (dispatch unit, DPU), or the like.
(3) The terms "system" and "network" may be used interchangeably in the embodiments of this application. The term "a plurality of" means two or more than two. In view of this, "a plurality of" can be understood as "at least two" in the embodiments of this application. The term "and/or" describes an association relationship for describing associated objects and indicates that three relationships may exist. For example, A and/or B may indicate the following three cases: Only A exists, both A and B exist, and only B exists. In addition, the character "/", unless otherwise specified, generally indicates an "or" relationship between the associated objects.

In addition, unless otherwise specified, ordinal numbers, such as "first" and "second", mentioned in the embodiments of this application are intended to distinguish between a plurality of objects, but are not intended to limit a sequence, a time sequence, priorities, or importance levels of the plurality of objects.

The foregoing describes some concepts in the embodiments of this application, and the following describes the technical background of the embodiments of this application.

FTTH (fiber to the home, fiber to the home) technologies represented by a PON can meet growing expectations for an access network rate in terms of bandwidth. However, it is difficult to overcome limitations in aspects such as investment costs, deployment and O&M, and stability. Particularly, construction costs of fiber to the home are prohibitive, and full lifecycle costs fall far short of expectations of operators. Copper access technologies such as digital subscriber line (digital subscriber line, DSL) technologies have significant advantages in aspects such as investment and O&M. The operators expect to provide broadband access services that meet user requirements in the next one or two decades or longer, while protecting and utilizing existing copper cable investments. For continuous optimization and development of the DSL technologies, the latest research proposes a P2MP architecture for a twisted-pair network. In the P2MP network architecture, twisted pairs connect one port of a central office device and a plurality of CPEs, and the CPEs access the network by communicating with the central office device.

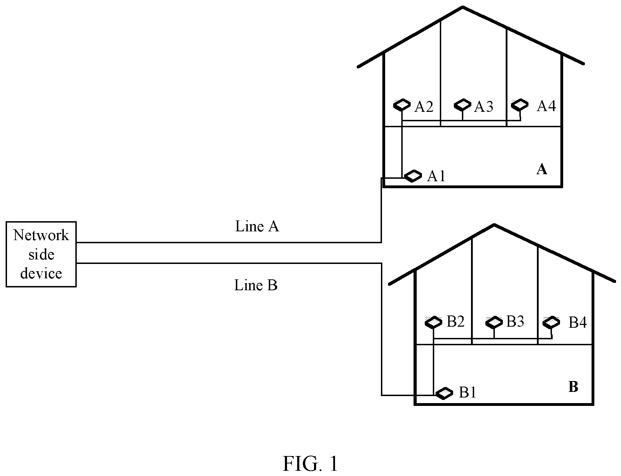

FIG. 1 is a schematic diagram of a network architecture applicable to an embodiment of the present invention. As shown in FIG. 1, a network side device includes a plurality of ports, and each port may be connected to one twisted pair, to form one line. Each line is connected to one user node, and each user node is connected to at least two CPEs. Generally, at least two CPEs connected to one user node are CPEs that belong to a same family. In FIG. 1, for example, the network side device is connected to two twisted pairs (a line A and a line B) through two ports. The line A is connected to a user node A. The user node A is connected to CPEs that belong to a family A. The CPEs that belong to the family A include A1, A2, A3, and A4. The line B is connected to a user node B. The user node B is connected to CPEs that belong to a family B. The CPEs that belong to the family B include B1, B2, B3, and B4. The CPEs connected to each user node may share resources on one line in a time division multiplexing mode, a frequency division multiplexing mode, or a code division multiplexing mode. Generally, a time for a communications line between the network side device and the CPE is divided into a plurality of basic frames, and a preset quantity of basic frames are grouped into one superframe.

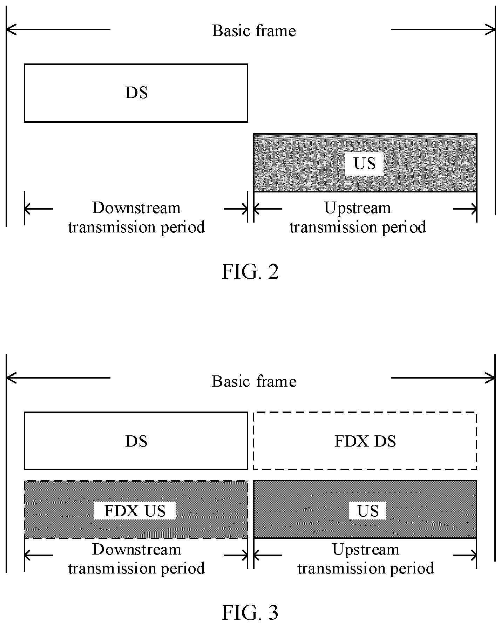

In a network shown in FIG. 1, a half-duplex (half-duplex, HDX) working mode may be used as an upstream transmission mode and a downstream transmission mode. In other words, at a same moment, a transceiver at one end can only send or receive a signal, and a transceiver at a peer end can only perform an opposite operation (sending and receiving are two opposite operations). A basic frame in the half-duplex working mode is shown in FIG. 2. One basic frame includes a downstream transmission period and an upstream transmission period. In the upstream transmission period, a CPE sends an upstream (upstream, US) signal, and a network side device receives the US signal. In the downstream transmission period, the network side device sends a downstream (downstream, DS) signal, and the CPE receives the DS signal. Alternatively, a full-duplex (Full Duplex, FDX) working mode may be used as an upstream transmission mode and a downstream transmission mode. In other words, at a same moment, a transceiver at one end sends a signal while receiving a signal sent by a transceiver at a peer end, and the transceiver at the peer end receives the signal while sending the signal. A basic frame in the full-duplex mode is shown in FIG. 3. The basic frame also includes a downstream transmission period and an upstream transmission period. Signals are sent and received at either end in the two periods. Therefore, for distinguishing, a US transmission resource is a resource on which a CPE sends a US signal and a network side device receives the US signal in the upstream transmission period; a DS transmission resource is a resource on which the network side device sends a DS signal and the CPE receives the DS signal in the downstream transmission period; an FDX US transmission resource is a resource on which the CPE sends a US signal and the network side device receives the US signal in the downstream transmission period; and an FDX DS transmission resource is a resource on which the network side device sends a DS signal and the CPE receives the DS signal in the upstream transmission period.

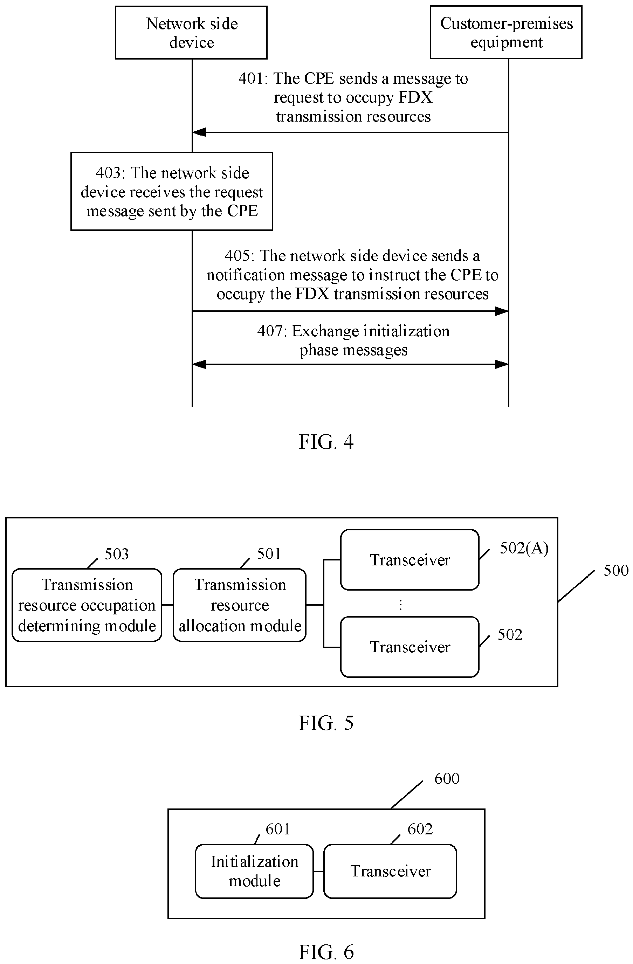

An embodiment of the present invention provides an initialization signal processing method, applied to the network architecture shown in FIG. 1. As shown in FIG. 4, the method includes step 401 to step 407. As described above, a network side device in the network includes a plurality of ports, each of the plurality of ports may be connected to a user node with a twisted pair, and the user node is connected to at least two customer-premises equipments CPEs. The at least two CPEs communicate with the network side device with the twisted pair in a time division multiplexing mode, a frequency division multiplexing mode, or a code division multiplexing mode.

Step 401: A CPE sends a request message to the network side device, where the request message indicates that the CPE requests to enter an initialization phase and occupy FDX transmission resources on the twisted pair, and the FDX transmission resources include an FDX US transmission resource and an FDX DS transmission resource.

The request message is sent by the CPE on a US transmission resource.

Step 403: The network side device receives the request message sent by the CPE.

Step 405: If there are some idle resources in the FDX transmission resources, the network side device sends a notification message to the CPE, where the notification message instructs the CPE to occupy some idle resources in the FDX transmission resources to send and receive initialization phase messages.

The some resources in the FDX transmission resources are some or all of the FDX transmission resources. The some idle resources in the FDX transmission resources are at least a part of the FDX transmission resources which is idle in frequency domain, time domain, or code domain. In other words, the FDX transmission resource is divided into smaller resource blocks in a frequency division multiplexing mode, a time division multiplexing mode, a code division multiplexing mode, or the like, and some of the resource blocks are idle.

The notification message is sent by the network side device on a DS transmission resource.

Step 407: The network side device and the CPE exchange the initialization phase messages on the some idle resources in the FDX transmission resources.

In this period, only basic information may be exchanged. The basic information includes at least one of the following pieces of information:
◆ clock synchronization information, used for clock synchronization between the network side device and the CPE;
◆ a selected pilot tone (pilot tone);
◆ specified upstream transmit power spectral density PSD and/or specified downstream transmit power spectral density;
◆ a transmission window length;
◆ a timing advance (timing advance) parameter, used to ensure that signals sent by CPEs simultaneously reach a U interface on a network side;
◆ a selected blackout (blackout) sub-carrier; and
◆ a downstream signal-to-noise ratio SNR

The basic information may further include other information, for example:
◆ upstream reference power spectral density (reference PSD);
◆ time of day (time of day, ToD);
◆ network timing reference (network timing reference, NTR);
◆ an upstream bit loading table (bit table) and/or a downstream bit loading table; and
◆ an upstream tone ordering table (tone table) and/or a downstream tone ordering table.

In the solution of this embodiment, the CPE that requests to enter the initialization phase is separately allocated FDX transmission resources, and does not need to contend with another CPE in a showtime phase for a US transmission resource and a DS transmission resource in a basic frame, to complete initialization in a relatively short time. This reduces waiting time of accessing a network by a user, and improves internet surfing experience of the user.

The foregoing procedure is specific to a scenario in which there are some idle resources in the FDX transmission resources. In an optional embodiment, before step 405, the method further includes Step 404 (not shown in the figure): Determine whether the FDX transmission resources are idle, in other words, determine whether the FDX transmission resources are occupied. If all the FDX transmission resources have been occupied, the network side device instructs a CPE that occupies the FDX transmission resources to release some of the FDX transmission resources occupied by the CPE, or directly sets some of the FDX transmission resources to idle, or rejects the request of the CPE. The CPE may send a request message again in the first basic frame or another basic frame after the request of the CPE is rejected.

The method further includes Step 409 (not shown in the figure): After exchange of the initialization phase messages ends, the network side device releases the some resources that are in the FDX transmission resources and are used by the CPE to exchange the initialization phase messages. In other words, the network side device sets the some resources to idle. The release operation may be directly performed by the network side device, or may be performed by the network side device according to a request of the CPE.

In an optional implementation, in the foregoing processing procedure, if an initialization procedure fails, the network side device releases the some resources that are in the FDX transmission resources and are used by the CPE to exchange the initialization phase messages.

In another optional implementation, after the network side device releases the resources that are in the FDX transmission resources and are used by the CPE to exchange the initialization phase messages, if the initialization procedure still does not end, the network side device may continue to exchange information required for the initialization phase with the CPE on resources in a DS transmission resource and a US transmission resource. This implementation may be used in some specific scenarios, for example, a scenario in which there are still available resources in the DS transmission resource and the US transmission resource. The CPE exchanges basic information for the initialization phase only on FDX transmission resources. The CPE may not exchange other information on the FDX transmission resources, but contend for resources in a DS transmission resource and a US transmission resource to exchange the other information.

The CPE uses the FDX transmission resources, and may also send an upstream sync symbol in an upstream transmission period of a sync frame. In this way, the network side device may estimate a far-end crosstalk (far-end crosstalk, FEXT) channel from the CPE to another port, and calculate a FEXT coefficient. After the CPE releases the FDX transmission resources, the network side device may cancel, using the calculated FEXT coefficient, crosstalk caused by the CPE. In this way, it can be ensured that rates of the CPE and the another port are not affected by FEXT. If a plurality of CPEs that share FDX transmission resources are initializing, all the initializing CPEs that share the FDX transmission resources need to send upstream sync symbols at upstream sync symbol positions in an upstream transmission period of a sync frame, and pilot sequences carried by the sync symbol are orthogonal to each other.

The following embodiment describes a working state of a CPE in a specific scenario. It is assumed that, a network side device has two ports (line A CO port and line B CO port) and is connected to two lines (line A and line B), and each line is connected to four CPEs. CPEs A1 to A4 are connected to the line A. The CPEs A2 to A4 have entered a showtime phase, and the CPE A1 is to enter an initialization phase. After processing is performed according to step 401 to step 407 shown in FIG. 4, working states of the COs and CPEs are shown in Table 1.

**Table 1 Table of the working states of the COs and CPEs**

| | Downstream transmission period | | Upstream transmission period | |
|---|---|---|---|---|
| **Network side device** | **Send a downstream symbol (DS)** | **Receive an upstream symbol (FDX US)** | **Send a downstream symbol (FDX DS)** | **Receive an upstream symbol (US)** |
| line A CO | √ | √ | √ | √ |
| line B CO | √ | | | √ |

| **CPE** | **Receive a downstream symbol (DS)** | **Send an upstream symbol (FDX US)** | **Receive a downstream symbol (FDX DS)** | **Send an upstream symbol (US)** |
|---|---|---|---|---|
| CPEs A2 to A4 on the line A | √ | | | √ |
| CPE A1 on the line A | | √ | √ | |
| CPEs B1 to B4 on the line B | √ | | | √ |

It can be learned from Table 1 that, the line B CO and the CPEs on the line B are still in a half-duplex mode, but the line A CO performs sending and receiving in both the downstream transmission period and the upstream transmission period, in other words, the line A CO is in a full-duplex mode. The showtime CPEs (the CPEs A2 to A4) on the line A are in the half-duplex mode. The initializing CPE (the CPE A1) on the line A is also in the half-duplex mode. However, the CPEs A2 to A4 use US transmission resources and DS transmission resources, but the CPE A1 uses an FDX US transmission resource and an FDX DS transmission resource. It can be learned from Table 1 that, the CPE A1 does not contend with the CPEs A2 to A4 for transmission resources. Therefore, it can be ensured that information is exchanged in time in the initialization phase, and an initialization time are reduced.

As shown in FIG. 5, another embodiment of the present invention provides a network side device 500, including a transmission resource allocation module 501 and a plurality of transceivers 502. At least one transceiver 502A in the plurality of transceivers 502 is connected to a user node with a twisted pair. The transceiver 502A communicates with, with the twisted pair connected to the transceiver 502A, a plurality of customer-premises equipments CPEs connected to the user node in a time division multiplexing mode, a frequency division multiplexing mode, or a code division multiplexing mode.

The transceiver 502A is configured to receive a request message sent by a CPE. The request message indicates that the CPE requests to enter an initialization phase and occupy FDX transmission resources on the twisted pair. The FDX transmission resources include an FDX US transmission resource and an FDX DS transmission resource.

The transmission resource allocation module 501 is configured to: when there are some idle resources in the FDX transmission resources, allocate the some idle resources to the CPE, and the transceiver 502A sends a notification message to the CPE. The notification message instructs the CPE to occupy the some idle resources in the FDX transmission resources to send and receive initialization phase messages.

The transceiver 502A is further configured to: receive an initialization phase message sent by the CPE on the some idle resources in the FDX transmission resources, and send an initialization phase message to the CPE on the some idle resources in the FDX transmission resources.

The some resources in the FDX transmission resources are some or all of the FDX transmission resources. The some idle resources in the FDX transmission resources are at least a part of the FDX transmission resources which is idle in frequency domain, time domain, or code domain. In other words, the FDX transmission resource is divided into smaller resource blocks in a frequency division multiplexing mode, a time division multiplexing mode, a code division multiplexing mode, or the like, and some of the resource blocks are idle.

The network side device 500 further includes a transmission resource occupation determining module 503. The transmission resource occupation determining module 503 is configured to determine whether the FDX transmission resources are occupied. If all the FDX transmission resources have been occupied, the transmission resource occupation determining module 503 is configured to: instruct, through the transceiver 502A, a CPE that occupies the FDX transmission resources to release some of the FDX transmission resources occupied by the CPE, or directly set some of the FDX transmission resources to idle, or reject the request of the CPE. If there are still unoccupied FDX transmission resources, the transmission resource occupation determining module 503 is configured to instruct the transmission resource allocation module 501 to allocate the resources to the CPE that requests the FDX transmission resources.

In an optional implementation, after exchange of the initialization phase messages ends, the transmission resource allocation module 501 is configured to release the some resources that are in the FDX transmission resources and are used by the CPE to exchange the initialization phase messages. In other words, the transmission resource allocation module 501 is configured to set the some resources to idle. The release operation may be directly performed by the transmission resource allocation module 501, or may be performed by the transmission resource allocation module 501 according to a request of the CPE.

In an optional implementation, in the foregoing initialization procedure, if the initialization procedure fails, the transmission resource allocation module 501 is configured to release the some resources that are in the FDX transmission resources and are used by the CPE to exchange the initialization phase messages.

In another optional implementation, after the transmission resource allocation module 501 releases the resources that are in the FDX transmission resources and are used by the CPE to exchange the initialization phase messages, if the initialization procedure still does not end, the transceiver 502A may be configured to continue to exchange information required for the initialization phase with the CPE on resources in a DS transmission resource and a US transmission resource.

The network side device in this embodiment of the present invention may correspond to the network side device in FIG. 4, and the foregoing operations and/or functions and another operation and/or function of the modules in this embodiment are intended to implement corresponding procedures performed by the network side device in the embodiment shown in FIG. 4. For brevity, details are not described herein.

As shown in FIG. 6, still another embodiment of the present invention provides a customer-premises equipment CPE 600. The CPE 600 is one of a plurality of CPEs connected to a user node. The user node is connected to a network side device with a twisted pair. The plurality of CPEs communicate with the network side device in a time division multiplexing mode, a frequency division multiplexing mode, or a code division multiplexing mode. The CPE 600 includes an initialization module 601 and a transceiver 602.

The initialization module 601 is configured to control the transceiver 602 to send a request message to the network side device. The request message indicates that the CPE 600 requests to enter an initialization phase and occupy FDX transmission resources on the twisted pair. The FDX transmission resources include an FDX US transmission resource and an FDX DS transmission resource.

The transceiver 602 is configured to: receive a notification message sent by the network side device. The notification message instructs the CPE 600 to occupy some idle resources in the FDX transmission resources to send and receive initialization phase messages.

The some resources in the FDX transmission resources are some or all of the FDX transmission resources. The some idle resources in the FDX transmission resources are at least a part of the FDX transmission resources which is idle in frequency domain, time domain, or code domain. In other words, the FDX transmission resource is divided into smaller resource blocks in a frequency division multiplexing mode, a time division multiplexing mode, a code division multiplexing mode, or the like, and some of the resource blocks are idle.

The initialization module 601 is configured to control the transceiver 602 to send an initialization phase message on the some idle resources in the FDX transmission resources and receive, on the some idle resources in the FDX transmission resources, an initialization phase message sent by the network side device.

In an optional implementation, after exchange of the initialization phase messages ends, the initialization module 601 is configured to: release the some resources that are in the FDX transmission resources and are used to exchange the initialization phase messages, and after the initialization module 601 releases the some resources, the transceiver 602 sends a message to notify the network side device that the some resources are released.

In another optional implementation, in the foregoing initialization procedure, if the initialization procedure fails, the initialization module 601 is configured to release the some resources that are in the FDX transmission resources and are used to exchange the initialization phase messages.

In still another optional implementation, after the initialization module 601 releases the resources that are in the FDX transmission resources and are used to exchange the initialization phase messages, if the initialization procedure still does not end, the transceiver 602 may be configured to continue to exchange information required for the initialization phase with the CPE 600 on resources in a DS transmission resource and a US transmission resource.

The CPE 600 in this embodiment of the present invention may correspond to the CPE in FIG. 4, and the foregoing operations and/or functions and another operation and/or function of the modules in this embodiment are intended to implement corresponding procedures performed by the CPE in the embodiment shown in FIG. 4. For brevity, details are not described herein.

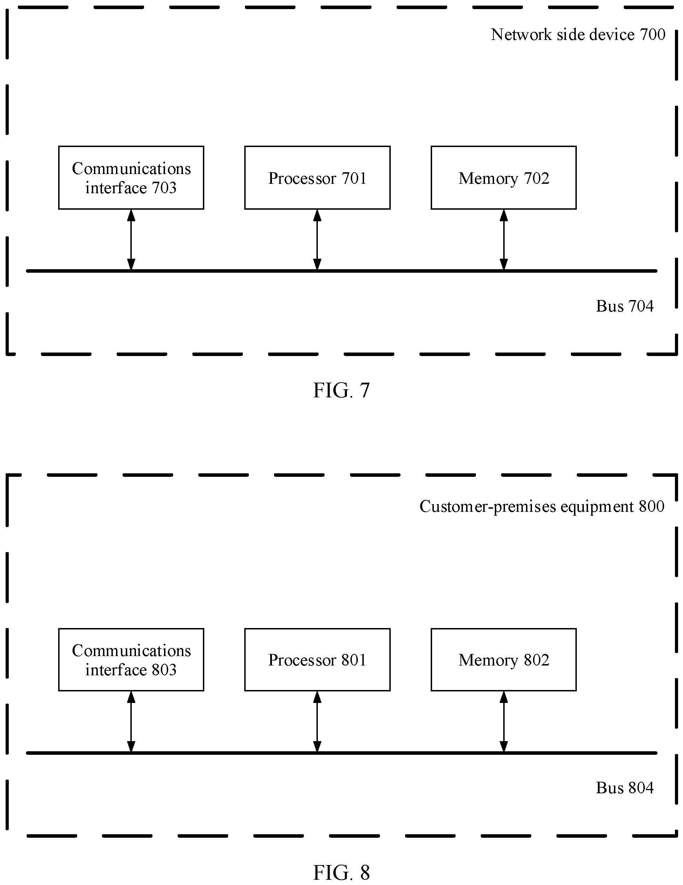

FIG. 7 is a schematic block diagram of a network side device 700 according to another embodiment of the present invention. As shown in FIG. 7, the network side device 700 includes a processor 701, a memory 702, and a communications interface 703. The memory 702 is configured to store executable program code. The processor 701 is configured to run a program corresponding to the executable program code by reading the executable program code stored in the memory 702. The communications interface 703 is configured to communicate with an external device. The network side device 700 may further include a bus 704. The bus 704 is configured to connect the processor 701, the memory 702, and the communications interface 703, so that the processor 701, the memory 702, and the communications interface 703 communicate with each another with the bus 704.

The network side device 700 in this embodiment of the present invention may correspond to the network side device in the embodiment shown in FIG. 4, and the operations and/or functions of the network side device 700 are intended to implement corresponding procedures performed by the network side device in the embodiment shown in FIG. 4. For brevity, details are not described herein.

FIG. 8 is a schematic block diagram of a customer-premises equipment 800 according to another embodiment of the present invention. As shown in FIG. 8, the customer-premises equipment 800 includes a processor 801, a memory 802, and a communications interface 803. The memory 802 is configured to store executable program code. The processor 801 is configured to run a program corresponding to the executable program code by reading the executable program code stored in the memory 802. The communications interface 803 is configured to communicate with an external device. The customer-premises equipment 800 may further include a bus 804. The bus 804 is configured to connect the processor 801, the memory 802, and the communications interface 803, so that the processor 801, the memory 802, and the communications interface 803 communicate with each another with the bus 804.

The customer-premises equipment 800 in this embodiment of the present invention may correspond to the CPE in the embodiment shown in FIG. 4, and the operations and/or functions of the customer-premises equipment 800 are intended to implement corresponding procedures performed by the customer-premises equipment in the embodiment shown in FIG. 4. For brevity, details are not described herein.

An embodiment of the present invention provides a synchronization symbol sending system, including the network side device 700 shown in FIG. 7 and the customer-premises equipment 800 shown in FIG. 8.

All or some of the foregoing embodiments may be implemented by software, hardware, firmware, or any combination thereof. When software is used to implement the embodiments, the embodiments may be all or partially implemented in a form of a computer program product. The computer program product includes one or more computer instructions. When the computer program instructions are loaded and executed on a computer, the procedures or functions according to the embodiments of the present invention are all or partially generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (Solid-State Disk, SSD)), or the like.

## Claims

1. An initialization signal processing method, wherein the method is performed by a network side device, the network side device comprises a plurality of ports, at least one of the plurality of ports is connected to a user node with a twisted pair, the user node is connected to at least two customer-premises equipments CPEs, and the method comprises:
receiving, by the network side device, a request message sent by a CPE, wherein the request message indicates that the CPE requests to enter an initialization phase and occupy FDX transmission resources on the twisted pair, the FDX transmission resources comprise an FDX US transmission resource and an FDX DS transmission resource, the FDX US transmission resource is a resource on which the CPE sends a US signal and the network side device receives the US signal in a downstream transmission period, and the FDX DS transmission resource is a resource on which the network side device sends a DS signal and the CPE receives the DS signal in an upstream transmission period;
if there are some idle resources in the FDX transmission resources, sending, by the network side device, a notification message to the CPE, wherein the notification message instructs the CPE to occupy some idle resources in the FDX transmission resources; and
receiving, by the network side device, an initialization phase message sent by the CPE on the some idle resources in the FDX transmission resources, and sending an initialization phase message to the CPE on the some idle resources in the FDX transmission resources.

2. The method according to claim 1, wherein the some idle resources in the FDX transmission resources are at least a part of the FDX transmission resources which is idle in frequency domain, time domain, or code domain.

3. The method according to claim 1 or 2, wherein before the sending, by the network side device, a notification message to the CPE, the method further comprises: determining whether the FDX transmission resources are idle.

4. The method according to claim 3, wherein the method further comprises: if all the FDX transmission resources have been occupied, instructing, by the network side device, a CPE that occupies the FDX transmission resources to release some of the FDX transmission resources occupied by the CPE, or directly setting some of the FDX transmission resources to idle, or rejecting the request of the CPE.

5. The method according to claim 1, wherein the method further comprises: after exchange of the initialization phase messages ends, releasing, by the network side device, the some resources that are in the FDX transmission resources and are used by the CPE to exchange the initialization phase messages.

6. The method according to claim 1, wherein the method further comprises: if an initialization procedure fails, releasing, by the network side device, the some resources that are in the FDX transmission resources and are used by the CPE to exchange the initialization phase messages.

7. An initialization signal processing method, wherein the method is performed by a customer-premises equipment CPE, the CPE is one of a plurality of CPEs connected to a user node, the user node is connected to a network side device with a twisted pair, and the method comprises:
sending, by the CPE, a request message to the network side device, wherein the request message indicates that the CPE requests to enter an initialization phase and occupy FDX transmission resources on the twisted pair, the FDX transmission resources comprise an FDX US transmission resource and an FDX DS transmission resource, the FDX US transmission resource is a resource on which the CPE sends a US signal and the network side device receives the US signal in a downstream transmission period, and the FDX DS transmission resource is a resource on which the network side device sends a DS signal and the CPE receives the DS signal in an upstream transmission period;
receiving, by the CPE, a notification message sent by the network side device, wherein the notification message instructs the CPE to occupy some idle resources in the FDX transmission resources; and
sending, by the CPE, an initialization phase message on the some idle resources in the FDX transmission resources, and receiving, on the some idle resources in the FDX transmission resources, an initialization phase message sent by the network side device.

8. The method according to claim 7, wherein the some idle resources in the FDX transmission resources are at least a part of the FDX transmission resources which is idle in frequency domain, time domain, or code domain.

9. The method according to claim 7, wherein the method further comprises: after exchange of the initialization phase messages ends, releasing, by the CPE, the some resources that are in the FDX transmission resources and are used to exchange the initialization phase messages.

10. The method according to claim 7, wherein the method further comprises: if an initialization procedure fails, releasing, by the CPE, the some resources that are in the FDX transmission resources and are used to exchange the initialization phase messages.

11. The method according to claim 9 or 10, wherein the method further comprises: after the CPE sends a message to release the some resources, sending, by the CPE, a message to notify the network side device.

12. A network side device 500, comprising a transmission resource allocation module 501 and a plurality of transceivers 502, wherein at least one transceiver 502A in the plurality of transceivers 502 is connected to a user node with a twisted pair;
the transceiver 502A is configured to receive a request message sent by a CPE, wherein the request message indicates that the CPE requests to enter an initialization phase and occupy FDX transmission resources on the twisted pair, the FDX transmission resources comprise an FDX US transmission resource and an FDX DS transmission resource, the FDX US transmission resource is a resource on which the CPE sends a US signal and the transceiver 502Areceives the US signal in a downstream transmission period, and the FDX DS transmission resource is a resource the transceiver 502A sends a DS signal and the CPE receives the DS signal in an upstream transmission period;
the transmission resource allocation module 501 is configured to: when there are some idle resources in the FDX transmission resources, allocate the some idle resources to the CPE, and the transceiver 502A sends a notification message to the CPE, wherein the notification message instructs the CPE to occupy some idle resources in the FDX transmission resources; and
the transceiver 502A is further configured to: receive an initialization phase message sent by the CPE on the some idle resources in the FDX transmission resources, and send an initialization phase message to the CPE on the some idle resources in the FDX transmission resources.

13. The device according to claim 12, wherein the some idle resources are at least a part of the FDX transmission resources which is idle in frequency domain, time domain, or code domain.

14. The device according to claim 12 or 13, wherein before the sending, by the network side device, a notification message to the CPE, the method further comprises: determining whether the FDX transmission resources are idle.

15. The device according to claim 12, further comprising a transmission resource occupation determining module 503, wherein the transmission resource occupation determining module 503 is configured to determine whether the FDX transmission resources are occupied.

16. The device according to claim 15, wherein if all the FDX transmission resources have been occupied, the transmission resource occupation determining module 503 is configured to: instruct, through the transceiver 502A, a CPE that occupies the FDX transmission resources to release some of the occupied FDX transmission resources, or directly set some of the FDX transmission resources to idle, or reject the request of the CPE.

17. The device according to claim 12, wherein after exchange of the initialization phase messages ends, the transmission resource allocation module 501 is configured to release the some resources that are in the FDX transmission resources and are used by the CPE to exchange the initialization phase messages.

18. The device according to claim 12, wherein if an initialization procedure fails, the transmission resource allocation module 501 is configured to: release the some resources that are in the FDX transmission resources and are used by the CPE to exchange the initialization phase messages.

19. A customer-premises equipment CPE 600, wherein the CPE 600 is one of a plurality of CPEs connected to a user node, the user node is connected to a network side device with a twisted pair, and the CPE 600 comprises an initialization module 601 and a transceiver 602, wherein
the initialization module 601 is configured to control the transceiver 602 to send a request message to the network side device, wherein the request message indicates that the CPE 600 requests to enter an initialization phase and occupy FDX transmission resources on the twisted pair, the FDX transmission resources comprise an FDX US transmission resource and an FDX DS transmission resource, the FDX US transmission resource is a resource on which the transceiver 602 sends a US signal and the network side device receives the US signal in a downstream transmission period, and the FDX DS transmission resource is a resource on which the network side device sends a DS signal and the transceiver 602 receives the DS signal in an upstream transmission period; and
the transceiver 602 is configured to: receive a notification message sent by the network side device, wherein the notification message instructs the CPE 600 to occupy some idle resources in the FDX transmission resources to send and receive initialization phase messages.

20. The device according to claim 19, wherein after exchange of the initialization phase messages ends, the initialization module 601 is configured to release the some resources that are in the FDX transmission resources and are used to exchange the initialization phase messages.

21. The device according to claim 19, wherein if an initialization procedure fails, the initialization module 601 is configured to release the some resources that are in the FDX transmission resources and are used to exchange the initialization phase messages.

22. The method according to any one of claims 19 to 21, wherein the transceiver 602 is further configured to send a message to notify the network side device that the some resources are released after the initialization module 601 releases the some resources.

23. A computer-readable storage medium, wherein the computer-readable storage medium stores an instruction, and when the instruction is run on a computer, the computer is enabled to perform the following method:
the network side device comprises a plurality of ports, at least one of the plurality of ports is connected to a user node with a twisted pair, the user node is connected to at least two customer-premises equipments CPEs, and the method comprises:
receiving a request message sent by a CPE, wherein the request message indicates that the CPE requests to enter an initialization phase and occupy FDX transmission resources on a twisted pair, the FDX transmission resources comprise an FDX US transmission resource and an FDX DS transmission resource, the FDX US transmission resource is a resource on which the CPE sends a US signal and a network side device receives the US signal in a downstream transmission period, and the FDX DS transmission resource is a resource on which the network side device sends a DS signal and the CPE receives the DS signal in an upstream transmission period;
if there are some idle resources in the FDX transmission resources, sending a notification message to the CPE, wherein the notification message instructs the CPE to occupy some idle resources in the FDX transmission resources; and
receiving an initialization phase message sent by the CPE on the some idle resources in the FDX transmission resources, and sending an initialization phase message to the CPE on the some idle resources in the FDX transmission resources.

24. A computer-readable storage medium, wherein the computer-readable storage medium stores an instruction, and when the instruction is run on a computer, the computer is enabled to perform the following method:
sending a request message to a network side device, wherein the request message indicates that a CPE requests to enter an initialization phase and occupy FDX transmission resources on a twisted pair, the FDX transmission resources comprise an FDX US transmission resource and an FDX DS transmission resource, the FDX US transmission resource is a resource on which the CPE sends a US signal and the network side device receives the US signal in a downstream transmission period, and the FDX DS transmission resource is a resource on which the network side device sends a DS signal and the CPE receives the DS signal in an upstream transmission period;
receiving a notification message sent by the network side device, wherein the notification message instructs the CPE to occupy some idle resources in the FDX transmission resources; and
sending an initialization phase message on the some idle resources in the FDX transmission resources, and receiving, on the some idle resources in the FDX transmission resources, an initialization phase message sent by the network side device.
